# EUROPÄISCHE PATENTSCHRIFT

(11) **EP 4 137 395 B1**
(45) Veröffentlichungstag und Bekanntmachung des Hinweises auf die Patenterteilung: **23.04.2025**
(21) Anmeldenummer: 22188309.3
(22) Anmeldetag: 02.08.2022
(51) Int. Cl.: B62J 45/411, B62J 45/421, B62M 6/50

(54) **TRETWELLENANORDNUNG, STEUER- UND/ODER AUSWERTEVERFAHREN UND -EINHEIT FÜR EINE TRETWELLENANORDNUNG UND FAHRZEUG**
CRANKSHAFT ASSEMBLY, CONTROL AND / OR EVALUATION METHOD AND UNIT FOR A CRANKSHAFT ASSEMBLY AND VEHICLE
ENSEMBLE ARBRE DE PÉDALE, PROCÉDÉ ET UNITÉ DE COMMANDE ET/OU D'ÉVALUATION POUR UN ENSEMBLE ARBRE DE PÉDALE ET VÉHICULE

(30) Priorität: 18.08.2021 DE 102021209073
(43) Veröffentlichungstag der Anmeldung: 22.02.2023
(73) Patentinhaber: Robert Bosch GmbH, 70442 Stuttgart (DE)
(72) Erfinder: Zegowitz, Michael, 72070 Tuebingen (DE); Schatz, Frank, 70806 Kornwestheim (DE); Ossmann, Christoph, 72768 Reutlingen (DE)

(56) Entgegenhaltungen:
- DE-U1- 202008 018 111

## Beschreibung

### Stand der Technik

Die vorliegende Erfindung betrifft eine Tretwellenanordnung, ein Steuer- und/oder Auswerteverfahren, eine Steuer- und/oder Auswerteeinheit für eine Tretwellenanordnung, insbesondere jeweils für ein mit Muskelkraft und gegebenenfalls zusätzlich mit Motorkraft antreibbares Fahrzeug, für ein Elektrofahrrad, eBike, Pedelec oder dergleichen sowie ein derartiges Fahrzeug als solches.

Insbesondere bei eBikes - aber auch bei anderen mit Muskelkraft und gegebenenfalls zusätzlich mit Motorkraft antreibbaren Fahrzeugen - werden zur Drehmomenterfassung vermehrt Drehmomentsensoren eingesetzt, die es ermöglichen, ein in einer Tretwellenanordnung auf eine Abtriebswelle übertragenes Drehmoment im Hinblick auf seinen Wert zu erkennen, um zum Beispiel einen zugeschalteten oder zuschaltbaren motorischen Antrieb zu steuern. Beim Zusammenführen von durch Pedalieren und durch den motorischen Antrieb erzeugten Drehmomenten auf die Abtriebswelle erfolgt durch mechanische Überlagerung eine Art Summation der einzelnen Drehmomente, bei welcher Information über die Quelle des Drehmoments, rechter Fuß oder linker Fuß, verloren geht. Das Dokument DE202008018111 U1 offenbart eine bekannte Tretwellenanordnung mit allen Merkmale des Oberbegriffs des Anspruchs 1.

### Offenbarung der Erfindung

Die erfindungsgemäße Tretwellenanordnung weist demgegenüber den Vorteil auf, dass mit vergleichsweise einfachen Mitteln zuverlässig eine Links-Rechts-Information abgeleitet oder erhalten werden kann. Dies wird erfindungsgemäß dadurch erreicht, dass eine Tretwellenanordnung für ein mit Muskelkraft und insbesondere zusätzlich mit Motorkraft antreibbares Fahrzeug, für ein Elektrofahrrad, eBike, Pedelec oder dergleichen geschaffen wird, welche ausgebildet ist mit einer Tretwelle zum Empfangen oder Aufnehmen einer Kraft und/oder eines Drehmoments aus einem Pedalieren mittels an einander gegenüberliegenden Enden der Tretwelle angebrachter Tretkurbeln, einer Abtriebswelle zum Empfangen oder Aufnehmen einer Kraft und/oder eines Drehmoments von der Tretwelle, einer mechanischen Kopplung mit Abgriff zwischen den Enden der Tretwelle zur Kraft- und/oder Drehmomentenübertragung von der Tretwelle zur Abtriebswelle, einem ersten Magnetbereich auf und/oder in der Abtriebswelle zur Erzeugung und Abgabe eines vom mechanischen Spannungszustand der Abtriebswelle abhängigen ersten Magnetfeldes, einem zweiten Magnetbereich auf und/oder in der Tretwelle in axialer räumlicher Beabstandung zum Abgriff der mechanischen Kopplung und zur Erzeugung und Abgabe eines vom mechanischen Spannungszustand der Tretwelle abhängigen zweiten Magnetfeldes und einer Sensoranordnung zur Detektion eines von der Tretwellenanordnung abgegebenen Magnetfeldes. Mit diesen Maßnahmen ist es möglich, aus der Überlagerung der Magnetfelder der einzelnen Magnetbereiche qualitativ und/oder quantitativ auf einen jeweiligen Rechts-Links-Anteil am Gesamtdrehmoment zu schließen.

Die Unteransprüche zeigen bevorzugte Weiterbildungen der Erfindung.

Bei einer bevorzugten Ausführungsform der erfindungsgemäßen Tretwellenanordnung ist die Abtriebswelle mit einer oder als eine Hohlwelle und/oder koaxial zur Tretwelle ausgebildet ist, insbesondere mit einer gemeinsamen axialen Richtung y, Y, welche insbesondere der Richtung der jeweiligen Achse oder Symmetrieachse der jeweiligen Welle 10, 20 entspricht. Dies ermöglicht ein besonders hohes Maß an räumlicher Nähe zwischen Tretwelle und Abtriebswelle für eine besonders raumsparende Anordnung.

Alternativ oder zusätzlich kann die Abtriebswelle die Tretwelle teilweise, vollständig oder im Wesentlichen vollständig umgeben und mit dieser in der gemeinsamen axialen Richtung y, Y mit einem axialen räumlichen Überlappungsbereich räumlich überlappen, um dadurch eine räumlich besonders kompakte Bauform für die gesamte Tretwellenanordnung zu erreichen.

Bei einer anderen bevorzugten Ausführungsform der erfindungsgemäßen Tretwellenanordnung überlappen sich in der gemeinsamen axialen Richtung y, Y der erste Magnetbereich und der zweite Magnetbereich räumlich einander teilweise, vollständig oder im Wesentlichen vollständig mit einem räumlichen Magnetüberlappungsbereich. Durch diese Maßnahme kann mit einem besonders hohen Maß an Empfindlichkeit die Überlagerung der einzelnen Magnetfelder miteinander detektiert werden.

Dabei kann in der gemeinsamen axialen Richtung y, Y die Sensoranordnung teilweise, vollständig oder im Wesentlichen vollständig im räumlichen Magnetüberlappungsbereich ausgebildet sein, so dass ein besonders hohes Maß an Detektionsempfindlichkeit erreicht wird. Unter dem Magnetüberlappungsbereich kann z.B., aber nicht nur, derjenige und insbesondere zusammenhängende Raumbereich verstanden werden, in dem sich in der gemeinsamen axialen Richtung y, Y die ersten und zweiten Magnetbereiche räumlich überlappen.

Bei einem anderen alternativen oder zusätzlichen Ausführungsbeispiel der erfindungsgemäßen Tretwellenanordnung ist der zweite Magnetbereich ausgebildet, das zweite Magnetfeld in Umfangsrichtung der Tretwelle winkelabhängig zu erzeugen und auszugeben, insbesondere nach Art einer Stellungs- und/oder Winkelkodierung und/oder über eine oder gemäße einer Anzahl, Anordnung, Verteilung und/oder geometrischen Ausgestaltung magnetischer Abschnitte des zweiten Magnetbereichs. Durch diese Maßnahmen lässt sich besonders zuverlässig und mit vergleichsweise einfachen Mitteln eine Stellung und/oder Orientierung der Tretwelle und der an den Enden der Tretwelle angebrachten Tretkurbeln detektieren oder ableiten.

In Bezug auf die Ausgestaltung der Sensoranordnung bieten sich unterschiedliche Möglichkeiten an, dass Detektionsmaß hinsichtlich Empfindlichkeit und Genauigkeit an die jeweiligen Anforderungen der Anwendung anzupassen.

So ist es von besonderem Vorteil, wenn gemäß einer anderen Fortbildung der erfindungsgemäßen Tretwellenanordnung die Sensoranordnung eine Mehrzahl, insbesondere von zwei, Sensoren aufweist, der erste Magnetbereich eine entsprechende Mehrzahl von magnetischen Abschnitten in axialer Richtung voneinander räumlich beabstandet aufweist, die Anzahl der Sensoren der Anzahl der magnetischen Abschnitte entspricht, die Sensoren und die magnetischen Abschnitte in axialer Richtung der Abtriebswelle in Eins-zu-Eins-Zuordnung zueinander ausgerichtet sind und/oder in ihrer Zuordnung einander teilweise, vollständig oder im Wesentlichen vollständig räumlich überlappen und/oder der zweite Magnetbereich ein einzelner, homogener und/oder - zumindest in der gemeinsamen axialen Richtung y, Y - einfach zusammenhängender Bereich ist, welcher sämtliche magnetische Abschnitte und/oder sämtliche Sensoren in der gemeinsamen axialen Richtung y, Y teilweise, vollständig oder im Wesentlichen vollständig räumlich überlappt.

Grundsätzlich ist es alternativ oder zusätzlich erfindungsgemäß auch möglich, die Magnetisierung auf der Kurbelwelle axial vom Drehmoment Sensor zu beabstanden oder entfernen. Hier müssen dann ein oder mehrere Sensoren über der Abtriebswelle angebracht werden. Diese sehen dann ausschließlich das über Rechts eingeleitete Magnetfeld.

Ferner betrifft die vorliegende Erfindung ein Steuer- und/oder Auswerteverfahren für eine Tretwellenanordnung, welche insbesondere in der erfindungsgemäßen Weise ausgestaltet ist.

Bei einer Ausführungsform des erfindungsgemäßen Steuer- und/oder Auswerteverfahrens wird bzw. werden einzeln oder in beliebiger Kombination miteinander
- das mit der Sensoranordnung gemessene Signal in seinem zeitlichen Verlauf erfasst und insbesondere aufgezeichnet,
- Abschnitte zwischen zwei direkt aufeinanderfolgenden Minima im Verlauf des Signals als Halbphasen des Signals erkannt und/oder bewertet,
- Halbphasen des Signals, deren Signalwerte im Vergleich zu zeitlich direkt benachbarten Halbphasen zu größeren absoluten Werten hin verschoben sind (gemäß einer alternativen oder zusätzlichen Sichtweise des Konzepts der vorliegenden Erfindung kann erfindungsgemäß die Anordnung auch so ausgebildet sein, dass je nach Richtung der Magnetisierung und/oder je nach positivem/negativem Drehmoment die Verschiebung auch absolut negativer wird), als von derjenigen Seite der Tretkurbel verursacht und entsprechend entweder als "RECHTS" oder "LINKS" erkannt und bewertet, auf deren Seite relativ zur axialen Lage der mechanischen Kopplung der zweite Magnetbereich der Tretkurbel ausgebildet ist, und insbesondere die jeweils anderen Halbphasen des Signals als "LINKS" bzw. "RECHTS" erkannt und bewertet, und
- für eine zu steuernde Einrichtung, insbesondere eines zu Grunde liegenden Fahrzeugs, in Bezug auf ein aktuell mit der Sensoranordnung gemessenes Signal ein Steuersignal für eine aktuelle Halbphase "RECHTS" und/oder ein Steuersignal für eine aktuelle Halbphase "LINKS" erzeugt und an die Einrichtung zu deren Steuerung ausgegeben.

Bei einer besonders bevorzugten Weiterbildung des erfindungsgemäßen Steuer- und/oder Auswerteverfahrens ist bzw. wird ein jeweiliges Steuersignal:
- für den Wert des auf die Tretwelle aufgebrachten Drehmoments repräsentativ,
- als aktuelles, zeitlich abhängiges und/oder als zu dem aktuellen Verlauf des mit der Sensoranordnung gemessenen Signals korrespondierendes Signal generiert,
- als Steuersignal zum Steuern eines Motorantriebs des zu Grunde liegenden Fahrzeugs generiert,
- als Steuersignal zum Speichern eines Werts in einem Speicher generiert und/oder
- als Steuersignal zum Steuern einer akustischen, haptischen und/oder optischen Anzeige generiert.
- Der Fahrer kann durch die oben dargestellten Zuordnungen auch die Fitness seiner Beine individuell beurteilen und/oder dann bei Bedarf im Training berücksichtigen, indem zum Beispiel die Unterstützung durch den Motor für Links und für Rechts unterschiedlich bestimmt und im Antrieb erfolgt.

Des Weiteren betrifft die vorliegende Erfindung auch eine Steuer- und/oder Auswerteeinheit für eine erfindungsgemäß ausgestaltete Tretwellenanordnung und für deren Betrieb.

Die Steuer- und/oder Auswerteeinheit ist eingerichtet ist und weist Mittel auf, ein erfindungsgemäßes Steuer- und/oder Auswerteverfahren zu initiieren, auszuführen, zu steuern und/oder bei einem solchen Verfahren verwendet zu werden.

Schließlich betrifft die vorliegende Erfindung auch ein mit Muskelkraft und insbesondere zusätzlich mit Motorkraft antreibbares Fahrzeug als solches und insbesondere ein Elektrofahrrad, eBike, Pedelec oder dergleichen, welches mit einem Antrieb mit einer erfindungsgemäßen Tretwellenanordnung und/oder mit einer erfindungsgemäß ausgestalteten Steuer- und/oder Auswerteeinheit ausgebildet ist und/oder welches eingerichtet ist und Mittel aufweist, ein erfindungsgemäßes Auswerte- und/oder Steuerverfahren zu initiieren, auszuführen, zu steuern und/oder bei einem solchen Verfahren verwendet zu werden.

### Kurzbeschreibung der Figuren

Unter Bezugnahme auf die beigefügten Figuren werden Ausführungsformen der Erfindung im Detail beschrieben.
- Figur 1A: ist eine perspektivische Seitenansicht einer erfindungsgemäß ausgestalteten Tretwelle, die bei der vorliegenden Erfindung verwendet werden kann, wobei die Welle das Magnetfeld unter Last generiert und im Ruhezustand die eigentliche und zu Grunde liegende Magnetisierung ist in einer Richtung umlaufend aufgebracht oder magnetisiert ist;
- Figur 1B: ist eine perspektivische Seitenansicht einer erfindungsgemäßen Tretwellenanordnung mit einer Tretwelle gemäß Figur 1A und einer daran mechanisch gekoppelten und die Tretwelle als Hohlwelle umgebenden Abtriebswelle;
- Figuren 2 und 3: sind schematische und teilweise geschnittene Seitenansichten einer herkömmlichen Tretwellenanordnung bei durch Pedalieren von rechts bzw. links eingeleiteten Drehmomenten;
- Figur 4: ist eine schematische Seitenansicht einer erfindungsgemäß ausgestalteten Tretwelle analog zur Darstellung aus Figur 1A, die bei der vorliegenden Erfindung verwendet werden kann;
- Figur 5: ist eine schematische und teilweise geschnittene Seitenansicht einer erfindungsgemäßen Tretwellenanordnung mit einer Tretwelle gemäß Figur 4 und einer daran mechanisch gekoppelten und die Tretwelle als Hohlwelle umgebenden Abtriebswelle; und
- Figuren 6 und 7: erläutern anhand von Graphen die Detektion von mit Drehmomenten im Zusammenhang stehenden Signalen bei der vorliegenden Erfindung.

### Bevorzugte Ausführungsformen der Erfindung

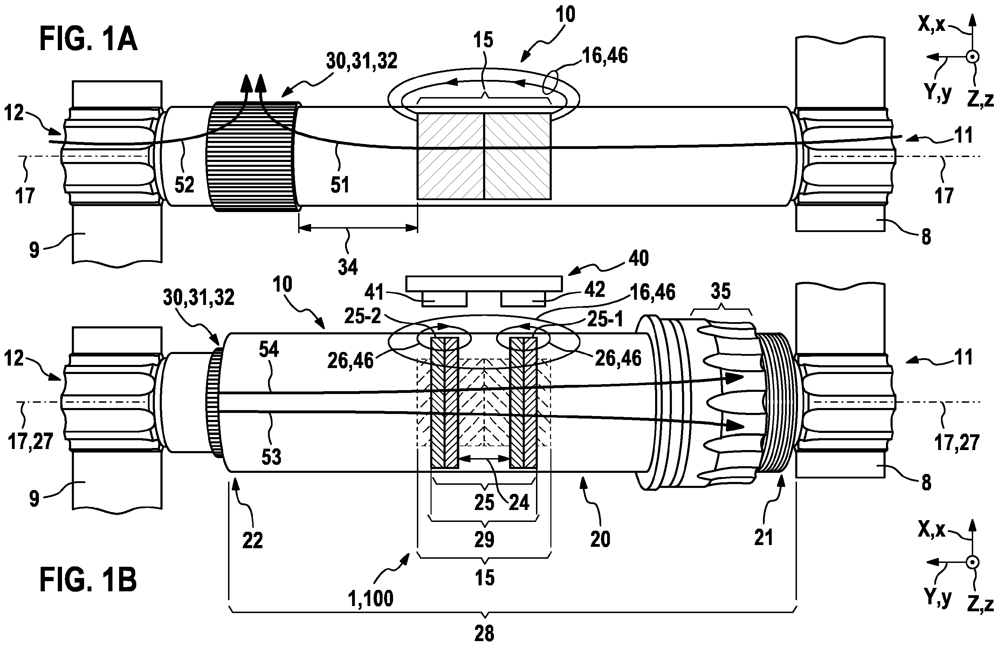

Nachfolgend werden unter Bezugnahme auf die Figuren 1A bis 7 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1A ist perspektivische Seitenansicht einer erfindungsgemäß ausgestalteten Tretwelle 10, die bei der vorliegenden Erfindung verwendet werden kann.

Die erfindungsgemäß ausgestaltete Tretwelle 10 erstreckt sich mit ihrer Längsachse 17 als Symmetrieachse der Tretwelle 10 und ihre Längserstreckungsrichtung in der Quererstreckungsrichtung Y des zu Grunde liegenden Fahrzeugs 1 und parallel zu y-Richtung. An den sich gegenüberliegenden rechten und linken Enden 11 bzw. 12 der Tretwelle 10 sind im montierten Zustand an der Tretwelle 10 erste und zweite Tretkurbeln 8 und 9 zur Aufnahme einer rechtsseitigen Kraft 51' oder eines rechtsseitigen Drehmoments 51 bzw. einer linksseitigen Kraft 52' oder eines linksseitigen Drehmoments 52 beim Pedalieren durch einen Benutzer angebracht.

Zur Übertragung des in die Tretwelle 10 durch Pedalieren eingeleiteten Drehmoments 51, 52 an eine Abtriebsseite und insbesondere an eine Abtriebswelle 20 ist eine mechanische Kopplung 30 mit einer entsprechenden als Abgriff 31 ausgebildeten Ausleitung für das Drehmoment 51, 52 ausgebildet, zum Beispiel in Form einer einfachen Verzahnung 32 oder in Form eines Getriebes. In Bezug auf die mechanische Kopplung 30 und ihre Lage entlang der Längsachse 17 der Tretwelle 10 liegt in einem bestimmten Abstand 34 dazu der erfindungsgemäß vorgesehene und ausgebildete zweite Magnetbereich 15, der in der Lage ist, in Abhängigkeit von einem mechanischen Spannungszustand der Tretwelle 10 ein zweites Magnetfeld 16 zu erzeugen und in den umgebenden Raum auszugeben.

Aufgrund der Lage des zweiten Magnetbereichs 15 relativ zur mechanischen Kopplung 30 erfolgt die für das zweite Magnetfeld 16 verantwortliche mechanische Verspannung im Wesentlichen in demjenigen Bereich der Tretwelle 10 und über die jeweilige Tretkurbel 8 oder 9 angreift, in welchem in Relation zur mechanischen Kopplung 30 der zweite Magnetbereich 15 liegt.

In der in Figur 1A dargestellten Situation erfolgt die Ausgabe eines Magnetfelds 16 im Wesentlichen nur dann, wenn die erste oder rechtsseitigen Kurbel 8 am ersten oder rechten Ende 11 der Tretwelle 10 betätigt wird, um eine rechtsseitige Kraft 51' einzuleiten und entsprechend ein rechtsseitiges Drehmoment 51 zu erzeugen, jedoch nicht bei Betätigung der linksseitigen Kurbel 9 am zweiten oder linken Ende 12 der Tretwelle 10 zum Einleiten einer linksseitigen Kraft 52' und zum Erzeugen eines linksseitigen Drehmoments 52.

Figur 1B ist eine perspektivische Seitenansicht einer erfindungsgemäßen Tretwellenanordnung 100 mit einer Tretwelle 10 gemäß Figur 1A und einer daran mechanisch gekoppelten und die Tretwelle 10 als Hohlwelle umgebenden Abtriebswelle 20.

Die Längsachse 27 oder Symmetrieachse der Abtriebswelle 20 fällt mit der Längsachse 17 oder Symmetrieachse der Tretwelle 10 in der Längserstreckungsrichtung Y des zu Grunde liegenden Fahrzeugs 1 und der y-Richtung zusammen, die Wellen 10 und 20 sind koaxial zueinander ausgebildet. Dabei umgibt die Abtriebswelle 20 als Hohlwelle mit ihrem ersten oder rechten Ende 21 und ihrem zweiten oder linken Ende 22 in einem räumlichen Überlappungsbereich 28 die Tretwelle 10 entlang der gemeinsamen axialen Richtung Y, y.

Die Abtriebswelle 20 weist einen ersten Magnetbereich 25 mit einem ersten oder rechtsseitigen magnetischen Abschnitt 25-1 und einem zweiten oder linksseitigen magnetischen Abschnitt 25-2 auf, die entlang der gemeinsamen axialen Richtung Y, y in einem Abstand 24 voneinander angeordnet sind und sich in der gemeinsamen axialen Richtung Y, y räumlich mit dem zweiten Magnetbereich 15, welcher einfach zusammenhängend ist, überlappen und dadurch den magnetischen Überlappungsbereich 29 bilden.

Durch die mechanische Kopplung 30 wird das jeweils in der Tretwelle 10 erzeugte rechtsseitige Drehmoment 51 oder linksseitigen Drehmoments 52 an die Abtriebswelle 20 als Drehmoment 53 bzw. als Drehmoment 54 übertragen und an den am ersten oder rechten Ende 21 ausgebildeten Übertragungsbereich 35 und zum Beispiel zu einem Kettenblatt oder einem anderen Abtriebselement weitergeleitet.

Durch die mechanische Beaufschlagung sowohl der Tretwelle 10 als auch der Abtriebswelle 20 entstehen aufgrund der mechanischen Spannungszustände in diesen Wellen 10 und 20 über die zweiten und ersten Magnetbereiche 15 bzw. 25 entsprechende Magnetfelder 16 bzw. 26 oder Magnetfeldänderungen in der Umgebung der Wellen 10 und 20, welche mittels der Sensoranordnung 40 mit einem oder mehreren Sensoren 41 und 42 als Gesamtmagnetfeld 46 oder dessen Änderung detektiert werden können.

Dabei überlagern sich die ersten und zweiten Magnetfelder 26 und 16 zu einem gemeinsamen Magnetfeld 46, wobei im Wesentlichen nur dann ein zweites Magnetfeld 16 erzeugt wird, wenn ein Drehmoment in Bezug auf die Lage der mechanischen Kopplung 30 auf der Seite der Tretwelle 10 einwirkt, auf der sich der zweite Magnetbereich 15 befindet. In der Anordnung gemäß den Figuren 1A und 1B wird also ein zweites Magnetfeld 16 nur dann erzeugt, wenn die erste oder rechte Tretkurbel 8 am ersten oder rechten Ende 11 der Tretwelle 10 betätigt wird, weil nur dann dieser Teil der Tretwelle 10 mit dem zweiten Magnetbereich 15 mit einer mechanischen Spannung beaufschlagt wird. Wird die zweite oder linke Kurbel 9 am zweiten oder linken Ende 12 der Tretwelle 10 betätigt, so wird dabei der zweite Magnetbereich 15 im Wesentlichen nicht beeinflusst, so dass im Wesentlichen kein zweites Magnetfeld 16 entsteht und sich mit dem ersten Magnetfeld 26 des ersten Magnetbereichs 25 zu einem Gesamtfeld 46 überlagert.

Das bedeutet, dass im zeitlichen Verlauf des Magnetfelds 46 ein Treten mit Rechts mit der rechten Kurbel 8 von einem Treten mit Links mit der linken Kurbel 9 in den Phasen des Gesamtmagnetfeldes 46 unterschieden werden kann.

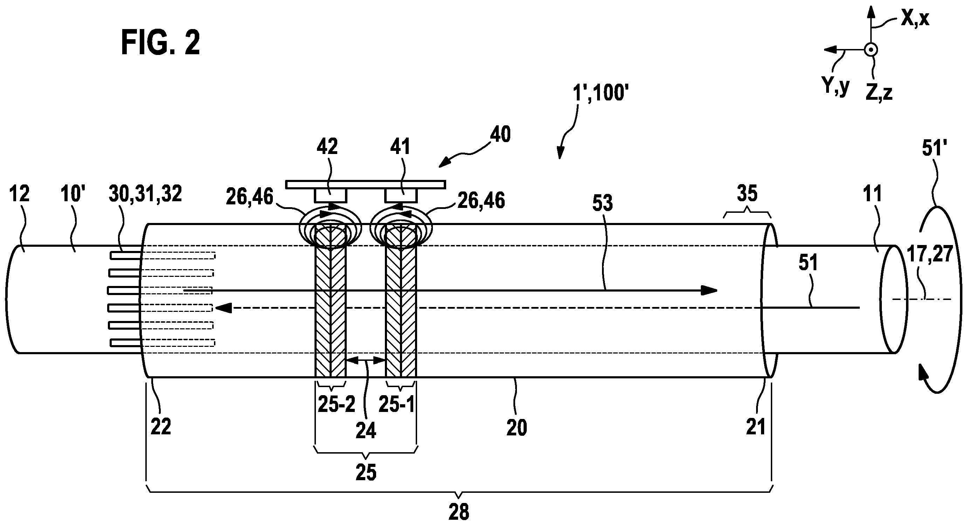

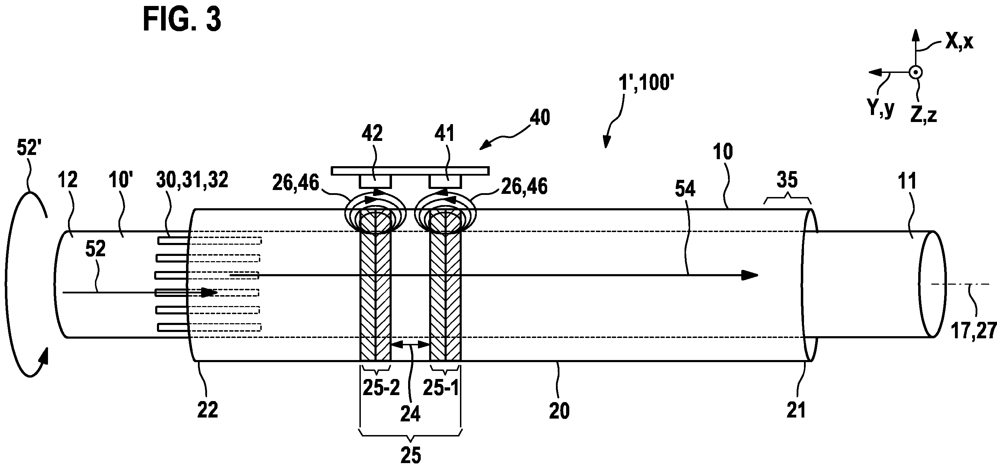

Die Figuren 2 und 3 sind schematische und teilweise geschnittene Seitenansichten einer herkömmlichen Tretwellenanordnung 100' eines herkömmlichen Fahrzeugs 1' für durch Pedalieren von rechts bzw. links in die herkömmliche Tretwelle 10' ohne zweiten Magnetbereich 15 eingeleitete Drehmomente 51 bzw. 52, welche mittels der mechanischen Kopplung 30 in der Abtriebswelle 20 als Hohlwelle als Summendrehmomente 53 bzw. 54 erscheinen.

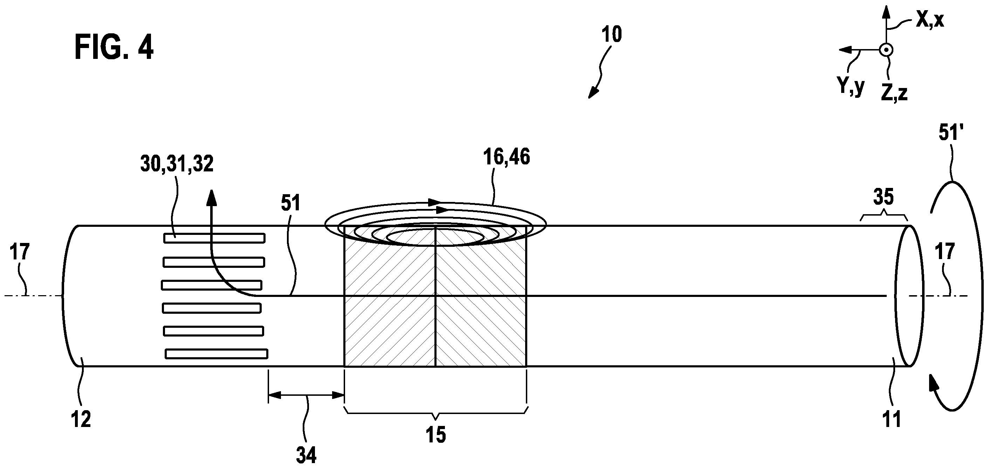

Figur 4 ist eine schematische Seitenansicht einer erfindungsgemäß ausgestalteten Tretwelle 10 analog zur Darstellung aus Figur 1A, die bei der vorliegenden Erfindung verwendet werden kann. Gezeigt ist ein Zustand, bei welchem die erste oder rechte Kurbel 8 am ersten oder rechten Ende 11 der Tretwelle 10 zur Einleitung einer rechtsseitigen Kraft 51' und zur Erzeugung eines rechtsseitigen Drehmoments 51 betätigt wird.

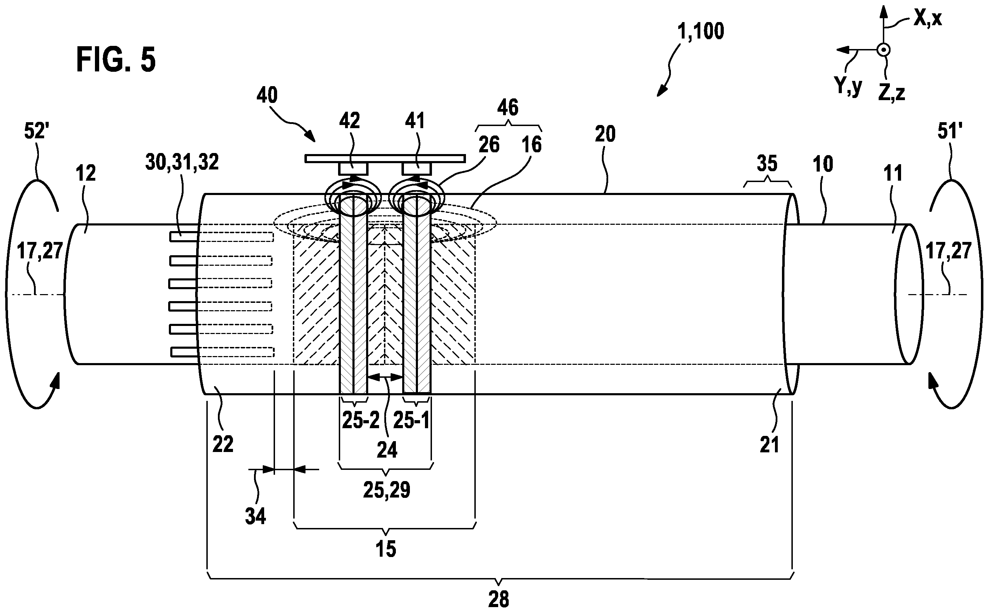

Figur 5 ist eine schematische und teilweise geschnittene Seitenansicht einer erfindungsgemäßen Tretwellenanordnung 100 mit einer erfindungsgemäßen Tretwelle 10 gemäß Figur 4 und einer daran mechanisch gekoppelten und die Tretwelle 10 als Hohlwelle umgebenden Abtriebswelle 20.

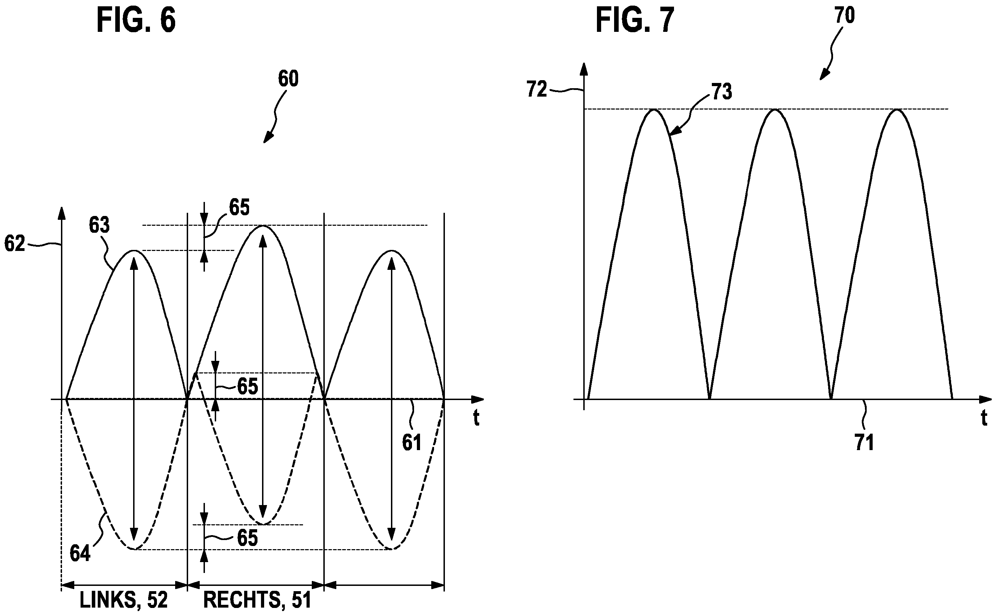

Die Figuren 6 und 7 erläutern anhand von Graphen 60 bzw. 70 die Detektion von mit Drehmomenten 51 bis 54 im Zusammenhang stehenden Signalen aus der Detektoranordnung 40 mit Detektoren 41 und 42 bei der vorliegenden Erfindung.

Auf den Abszissen 61 und 71 ist jeweils die Zeit t aufgetragen, auf den Ordinaten 62 und 72 ist jeweils das Sensorsignal aufgetragen, und zwar beim Graphen 60 gemäß Figur 6 die Einzelsignale der Sensoren 41 und 42 der Sensoranordnung 40 und beim Graphen 70 das Differenzsignal für die Sensoren 41 und 42.

Bei der Bewertung der Signale ist zu beachten, dass die Segmente 25-1 und 25-2 des ersten Magnetbereichs 25 im magnetischen Überlappungsbereich 29 in Bezug auf ihre Polarität entgegengesetzt zueinander angeordnet sind. Die zu Grunde liegende Magnetisierung ist (im Ruhezustand, d.h. ohne Last auf der Welle) jeweils umlaufend auf der Welle aufgebracht und entgegengesetzt orientiert. In der Figur zeigen 25-1 und 25-2 das Verhalten dieser umlaufenden Magnetisierung unter Last.

Daher erscheinen in den Spuren 63 und 64 für die Signale der Sensoren 41 bzw. 42 die Signalverläufe im positiven bzw. im negativen Bereich der Ordinate 62 und die Signaldifferenz in der Spur 73 des Graphen 70 aus Figur 7 ergibt dann im Wesentlichen die Summe des Nutzsignals, wobei durch Differenzbildung Störsignale "herausgefiltert" sind. Gemäß einer alternativen Sichtweise ist die Summe des Signals oder der Signale ist die Differenzbildung. Durch die Differenzbildung werden homogene Störfelder eliminiert und negative Sensorelementeigenschaften kompensiert, z.B. Temperaturdrift.

Entsprechend den erfindungsgemäßen Tretwellenanordnungen 100 gemäß Figuren 1A, 1B, 4 und 5 wird ein zweites Magnetfeld 16 im Wesentlichen nur bei rechtzeitiger Betätigung mit der ersten oder rechten Kurbel 8 am ersten oder rechten Ende 11 der Tretwelle 10 erzeugt. Dies führt zu einer Verschiebung 65 der entsprechenden Phasen der Signalverläufe der Spuren 63 für den Sensor 41 und 64 für den Sensor 42, welche RECHTS zugeordnet sind, wogegen die Phasen in den Spuren 63 und 64 für LINKS keinerlei Verschiebung aufweisen.

Diese und weitere Merkmale und Eigenschaften der vorliegenden Erfindung werden an Hand der folgenden Darlegungen weiter erläutert:
Die vorliegende Erfindung betrifft ganz allgemeinen das Bereitstellen von vorrichtungsmäßigen und/oder verfahrensmäßigen Mitteln zur Links-Rechts-Erkennung in einem eBike oder einem allgemeinen mit Muskelkraft und insbesondere zusätzlich mit Motorkraft antreibbaren Fahrzeug 1 mit einem Drehmomentsensor 40, 41, 42, der insbesondere ohnehin ausgebildet ist und auf Magnetfeldbasis arbeitet.

Es ist bekannt, dass bei herkömmlichen eBikes 1 und dergleichen durch die Mechanik in einer Antriebseinheit, die auch als Driveunit bezeichnet wird, werden beim Pedalieren die Drehmomente 51, 52 der linken und der rechten Kurbel oder Tretkurbeln 8, 9 an den Enden einer 11, 12 einer Tret- oder Kurbelwelle 10 über einen Sensierbereich 40 einer an die Tretwelle 10 mechanisch gekoppelten Abtriebswelle 20 geleitet und dabei überlagert oder addiert werden. Dadurch geht die Information verloren, von welchem Fuß die Kraft 51', 52' bzw. das Drehmoment 51, 52 in die Tretwelle 10 eingeleitet wurde.

Eine Aufgabe der Erfindung besteht im Bereitstellen von Mitteln zur Erkennung, über welche Seite der Driveunit beim Pedalieren das Drehmoment 51, 52 eingeleitet wird, ob also mit dem linken oder mit dem rechten Fuß getreten oder pedaliert wurde, insbesondere unter Verwendung eines aktiven Drehmomentsensors 40, 41, 42.

Vorteile der Erfindung bestehen unter anderen darin, dass neue Möglichkeiten der Regelung eines eBikes 1 geschaffen werden, um zum Beispiel in bestimmten Fahrsituationen unterschiedlich und in Abhängigkeit von einer Links-Rechts-Erkennung zu reagieren.

Ferner kann das erfindungsgemäße Konzept mit der Rechts-Links-Erkennung für Trainingsvorgänge genutzt werden, um zum Beispiel bei einem Bein die Motorunterstützung abschwächen, um die Muskulatur für dieses Bein zu stärken.

Des Weiteren ist eine Fitnessfunktion denkbar, bei welcher die Leistung der Beine je nach Training unterschiedlich sein kann. Mit der erfindungsgemäßen Art von Sensorik kann in der Bewegung zwischen einem linken und einem rechten Bein unterschieden werden. Durch eine Schnittstelle HMI oder eine App kann dem Benutzer die Fitness des jeweiligen Beins angezeigt werden, um seinen Rundlauf zu optimieren.

Über die mechanische Kopplung 30 oder Verzahnung 31 zwischen Kurbelwelle 10 und Hohlwelle als Abtriebswelle 20 werden beide Drehmomente, also das muskuläre und das motorische Drehmoment, addiert. Die Abtriebswelle 20 gibt bei Torsion auch schon herkömmlicherweise ein Magnetfeld 26, 46 an die Sensoren 41, 42 aus. Die Information der Krafteinleitung, also von welcher Seite sie eingeleitet wird, geht bei der herkömmlichen Konfiguration verloren. Dies soll erfindungsgemäß vermieden werden.

Für die Sensierelemente oder Sensoren 41 und 42 können z.B. Spulen, AMR, TMR, Hall- und andere Magnetfeldsensoren eingesetzt werden.

Eine erfindungsgemäße Idee besteht beim eBike oder einem allgemeinen mit Muskelkraft antreibbaren Fahrzeug 1 darin, durch eine zusätzliche, zweite Magnetisierung 15 auf der Kurbelwelle oder Tretwelle 10 und durch Überlagerung des entsprechenden zweiten Magnetfeldes 16 zum ersten Magnetfeld 26 der Abtriebswelle 20 zum Gesamtmagnetfeld 46 die bisher verlorene Richtungsinformation zu erhalten oder wiederzugewinnen.

Das zweite Magnetfeld 16 des zweiten Magnetbereichs 15 auf der Tretwelle 10 oder Kurbelwelle 10 bricht nur bei einer Krafteinleitung über die eine, zum Beispiel die rechte Seite in die Umgebung aus.

Wird die erfindungsgemäß mit dem zweiten Magnetbereich 15 modifizierte Kurbelwelle 10 in eine ansonsten bestehende herkömmliche Abtriebswelle 20 eingesteckt, kann die bestehende Sensorik 40 das zusätzliche Magnetfeld 16 dem Gesamtfeld 46 überlagert messen.

Das differenzielle Signal oder Differenzsignal 73 aus Figur 7 wird dabei nicht oder höchstens geringfügig beeinflusst, da es homogen ist.

Es findet hauptsächlich ein Shift oder eine Verschiebung 65 des gemessenen Magnetfelds 46 statt.

Im Hinblick auf das Signalverhalten ergibt sich, dass der rechte Fuß mit Krafteinleitung am ersten Ende 8 der Tretwelle 10 und der linke Fuß mit Krafteinleitung am zweiten Ende 9 der Tretwelle 10 jeweils über die Kurbel 8 bzw. 9 über die Sensoren 41 und 42 ein in etwa sinusförmiges Signal oder Drehmomentsignal generieren, wie dies im Graphen 60 der Figur 6 mit den Spuren 63 und 64 für die Sensoren 41 und 42 dargestellt ist.

Das Signal oder Drehmomentsignal wird durch seine differenzielle Verrechnung das homogene zweite Magnetfeld 16 aus dem zweiten Magnetbereich 15 der Tretwelle 10 nicht detektiert, wie dies im Graphen 70 der Figur 7 mit der Spur 73 dargestellt ist.

Jedoch detektieren die einzelnen Sensoren 41 und 42 der Sensoranordnung 40 die Verschiebung 65 oder den einen Offsetshift während das Bein in Bezug auf Position der mechanische Ankopplung 30 auf der Seite des zweiten Magnetbereichs 15, insbesondere das rechte Bein, ein Drehmoment 51 in die Tretwelle 10 einleitet.

Das Prinzip kann auch auf einen Einzelsensoren 41, 42 und auf andere Anzahlen von Sensoren 41, 42 und insbesondere auf mehr als zwei Sensorelemente 41, 42 der Sensoranordnung 40 und andere Verschaltungen angewandt werden.

## Patentansprüche

1. Tretwellenanordnung (100) für ein mit Muskelkraft und insbesondere zusätzlich mit Motorkraft antreibbares Fahrzeug (1), für ein Elektrofahrrad, eBike, Pedelec oder dergleichen, mit:
- einer Tretwelle (10) zum Empfangen einer Kraft und/oder eines Drehmoments aus einem Pedalieren mittels an Enden (11, 12) der Tretwelle (10) angebrachter Tretkurbeln (8, 9),
- einer Abtriebswelle (20) zum Empfangen einer Kraft und/oder eines Drehmoments von der Tretwelle (10),
- einer mechanischen Kopplung (30) mit Abgriff (31) zwischen den Enden (11, 12) der Tretwelle (10) zur Kraft- und/oder Drehmomentenübertragung von der Tretwelle (10) zur Abtriebswelle (20),
- einem ersten Magnetbereich (25) auf und/oder in der Abtriebswelle (20) zur Erzeugung und Abgabe eines vom mechanischen Spannungszustand der Abtriebswelle (20) abhängigen ersten Magnetfeldes (26),
- einem zweiten Magnetbereich (15) auf und/oder in der Tretwelle (10) in axialer Beabstandung zum Abgriff (31) der mechanischen Kopplung (30) und zur Erzeugung und Abgabe eines vom mechanischen Spannungszustand der Tretwelle (10) abhängigen zweiten Magnetfeldes (16), **dadurch gekennzeichnet, dass**
- eine Sensoranordnung (40) ein von der Tretwellenanordnung (100) abgegebenes Gesamtmagnetfeld (46) detektiert,
wobei sich das Gesamtmagnetfeld (46) aus einer Überlagerung aus dem ersten Magnetfeld (26) und dem zweiten Magnetfeld (16) ergibt.

2. Tretwellenanordnung (100) nach Anspruch 1, bei welcher die Abtriebswelle (20)
- mit einer oder als eine Hohlwelle ausgebildet ist,
- koaxial zur Tretwelle (10) ausgebildet ist und/oder
- die Tretwelle (10) teilweise, vollständig oder im Wesentlichen vollständig umgibt und mit dieser in der gemeinsamen axialen Richtung (y, Y) mit einem axialen räumlichen Überlappungsbereich (28) räumlich überlappt.

3. Tretwellenanordnung (100) nach einem der vorangehenden Ansprüche, bei welcher in der gemeinsamen axialen Richtung (y, Y) der erste Magnetbereich (25) und der zweite Magnetbereich (15) einander teilweise, vollständig oder im Wesentlichen vollständig mit einem räumlichen Magnetüberlappungsbereich (29) räumlich überlappen.

4. Tretwellenanordnung (100) nach Anspruch 3, bei welcher in der gemeinsamen axialen Richtung die Sensoranordnung (40) teilweise, vollständig oder im Wesentlichen vollständig im Magnetüberlappungsbereich (29) ausgebildet ist.

5. Tretwellenanordnung (100) nach einem der vorangehenden Ansprüche, bei welcher der erste Magnetbereich (25) und der zweite Magnetbereich (15) ausgebildet ist, das zweite Magnetfeld (16) in Umfangsrichtung der Tretwelle (10) winkelabhängig zu erzeugen und auszugeben, insbesondere nach Art einer Stellungs- und/oder Winkelkodierung und/oder über eine Anzahl, Anordnung, Verteilung und/oder geometrische Ausgestaltung magnetischer Abschnitte des zweiten Magnetbereichs (15).

6. Tretwellenanordnung (100) nach einem der vorangehenden Ansprüche, bei welcher:
- die Sensoranordnung (40) eine Mehrzahl, insbesondere von zwei, Sensoren (41, 42) aufweist,
- der erste Magnetbereich (25) eine entsprechende Mehrzahl von magnetischen Abschnitten (25-1, 25-2) in axialer Richtung voneinander räumlich beabstandet aufweist,
- die Anzahl der Sensoren (41, 42) der Anzahl der magnetischen Abschnitte (25-1, 25-2) entspricht,
- die Sensoren (41, 42) und die magnetischen Abschnitte (25-1, 25-2) in axialer Richtung der Abtriebswelle (20) in Eins-zu-eins-Zuordnung zueinander ausgerichtet sind und/oder in ihrer Zuordnung einander teilweise, vollständig oder im Wesentlichen vollständig räumlich überlappen und/oder
- der zweite Magnetbereich (15) ein einzelner, homogener und/oder einfach zusammenhängender Bereich ist, welcher sämtliche magnetische Abschnitte (25-1, 25-2) und/oder sämtliche Sensoren (41, 42) in der gemeinsamen axialen Richtung teilweise, vollständig oder im Wesentlichen vollständig räumlich überlappt.

7. Steuer- und/oder Auswerteverfahren für eine Tretwellenanordnung (100) nach einem der Ansprüche 1 bis 6 und deren Betrieb, bei welchem:
- das mit der Sensoranordnung (40) gemessene Signal in seinem zeitlichen Verlauf erfasst und insbesondere aufgezeichnet wird,
- Abschnitte zwischen zwei direkt aufeinanderfolgenden Minima im Verlauf des Signals als Halbphasen des Signals erkannt werden,
- Halbphasen des Signals, deren Signalwerte im Vergleich zu zeitlich direkt benachbarten Halbphasen zu größeren absoluten Werten hin verschoben sind, als von derjenigen Seite der Tretkurbel (10) verursacht und entsprechend entweder als "RECHTS" oder "LINKS" erkannt und bewertet werden, auf deren Seite relativ zur mechanischen Kopplung (30) der zweite Magnetbereich (15) der Tretkurbel (10) ausgebildet ist, und insbesondere die jeweils anderen Halbphasen des Signals als "LINKS" bzw. "RECHTS" erkannt und bewertet werden, und
- für eine zu steuernde Einrichtung, insbesondere eines zu Grunde liegenden Fahrzeugs (1), in Bezug auf ein aktuell mit der Sensoranordnung (40) gemessenes Signal ein Steuersignal für eine aktuelle Halbphase "RECHTS" und/oder ein Steuersignal für eine aktuelle Halbphase "LINKS" erzeugt und an die Einrichtung zu deren Steuerung ausgegeben wird bzw. werden.

8. Steuer- und/oder Auswerteverfahren nach Anspruch 7, bei welchem ein jeweiliges Steuersignal:
- für den Wert des auf die Tretwelle (10) aufgebrachten Drehmoments repräsentativ ist,
- als aktuelles und zeitlich abhängiges und/oder als zu dem aktuellen Verlauf des mit der Sensoranordnung (40) gemessenen Signals korrespondierendes Signal generiert wird,
- als Steuersignal zum Steuern eines Motorantriebs des zu Grunde liegenden Fahrzeugs (1) generiert wird,
- als Steuersignal zum Speichern eines Werts in einem Speicher generiert wird und/oder
- als Steuersignal zum Steuern einer akustischen, haptischen und/oder optischen Anzeige generiert wird.

9. Steuer- und/oder Auswerteeinheit für eine Tretwellenanordnung (100) nach einem der Ansprüche 1 bis 6 und deren Betrieb, welche eingerichtet ist und Mittel aufweist, ein Verfahren nach einem der Ansprüche 7 oder 8 zu initiieren, auszuführen, zu steuern und/oder bei einem solchen Verfahren verwendet zu werden.

10. Mit Muskelkraft und insbesondere zusätzlich mit Motorkraft antreibbares Fahrzeug (1), Elektrofahrrad, eBike, Pedelec oder dergleichen, welches mit einem Antrieb mit einer Tretwellenanordnung (100) nach einem der Ansprüche 1 bis 6 und/oder mit einer Steuer- und/oder Auswerteeinheit nach Anspruch 9 ausgebildet ist und/oder welches eingerichtet ist und Mittel aufweist, ein Verfahren nach einem der Ansprüche 7 oder 8 zu initiieren, auszuführen, zu steuern und/oder bei einem solchen Verfahren verwendet zu werden.

## Claims

1. Pedal shaft arrangement (100) for a vehicle (1) that can be driven by muscle power and in particular additionally by motor power, for an electric bicycle, eBike, pedelec or the like, comprising:
- a pedal shaft (10) for receiving a force and/or a torque from pedalling by means of pedal cranks (8, 9) attached to ends (11, 12) of the pedal shaft (10),
- an output shaft (20) for receiving a force and/or a torque from the pedal shaft (10),
- a mechanical coupling (30) comprising a tap (31) between the ends (11, 12) of the pedal shaft (10) for the transmission of force and/or torque from the pedal shaft (10) to the output shaft (20),
- a first magnetic region (25) on and/or in the output shaft (20) for generating and delivering a first magnetic field (26) that is dependent on the mechanical stress state of the output shaft (20),
- a second magnetic region (15) on and/or in the pedal shaft (10) at an axial distance from the tap (31) of the mechanical coupling (30) and for generating and delivering a second magnetic field (16) that is dependent on the mechanical stress state of the pedal shaft (10), **characterized in that**
- a sensor arrangement (40) detects a total magnetic field (46) delivered by the pedal shaft arrangement (100), the total magnetic field (46) resulting from a superimposition of the first magnetic field (26) and the second magnetic field (16).

2. Pedal shaft arrangement (100) according to Claim 1, wherein the output shaft (20)
- is formed by or as a hollow shaft,
- is formed coaxially with respect to the pedal shaft (10) and/or
- partially, completely or substantially completely surrounds the pedal shaft (10) and spatially overlaps said pedal shaft in the common axial direction (y, Y) with an axial spatial overlap region (28).

3. Pedal shaft arrangement (100) according to either of the preceding claims, wherein the first magnetic region (25) and the second magnetic region (15) partially, completely or substantially completely spatially overlap one another in the common axial direction (y, Y) with a spatial magnetic overlap region (29).

4. Pedal shaft arrangement (100) according to Claim 3, wherein the sensor arrangement (40) is partially, completely or substantially completely formed in the magnetic overlap region (29) in the common axial direction.

5. Pedal shaft arrangement (100) according to one of the preceding claims, wherein the first magnetic region (25) and the second magnetic region (15) are designed to generate and output the second magnetic field (16) in the circumferential direction of the pedal shaft (10) in an angle-dependent manner, in particular according to the type of a position coding and/or angle coding and/or by way of a number, arrangement, distribution and/or geometric configuration of magnetic sections of the second magnetic region (15).

6. Pedal shaft arrangement (100) according to one of the preceding claims, wherein:
- the sensor arrangement (40) has a plurality of, in particular two, sensors (41, 42),
- the first magnetic region (25) has a corresponding plurality of magnetic sections (25-1, 25-2) spaced apart from one another in the axial direction,
- the number of sensors (41, 42) corresponds to the number of magnetic sections (25-1, 25-2),
- the sensors (41, 42) and the magnetic sections (25-1, 25-2) are aligned with one another in a one-to-one association in the axial direction of the output shaft (20) and/or partially, completely or substantially completely spatially overlap one another in their association and/or
- the second magnetic region (15) is a single, homogeneous and/or simply connected region that partially, completely or substantially completely spatially overlaps all magnetic sections (25-1, 25-2) and/or all sensors (41, 42) in the common axial direction.

7. Control and/or evaluation method for a pedal shaft arrangement (100) according to one of Claims 1 to 6 and the operation thereof, wherein:
- the time characteristic of the signal measured using the sensor arrangement (40) is acquired and in particular recorded,
- sections between two directly consecutive minima in the characteristic of the signal are identified as half-phases of the signal,
- signal half-phases whose signal values are shifted to greater absolute values in comparison with half-phases that are directly adjacent in time are identified and rated as caused by that side of the pedal crank (10), and accordingly as either "RIGHT" or "LEFT", on whose side relative to the mechanical coupling (30) the second magnetic region (15) of the pedal crank (10) is formed, and in particular the other half-phases of the signal are identified and rated as "LEFT" or "RIGHT", and
- for a device to be controlled, in particular of an underlying vehicle (1), a control signal for a present half-phase "RIGHT" and/or a control signal for a present half-phase "LEFT" are/is generated with reference to a signal currently measured using the sensor arrangement (40) and are/is output to the device to control it.

8. Control and/or evaluation method according to Claim 7, wherein a respective control signal:
- is representative of the value of the torque applied to the pedal shaft (10),
- is generated as a present and time-dependent signal and/or as a signal corresponding to the present characteristic of the signal measured using the sensor arrangement (40),
- is generated as a control signal for controlling a motor drive of the underlying vehicle (1),
- is generated as a control signal for storing a value in a memory, and/or
- is generated as a control signal for controlling an audible, haptic and/or visual indicator.

9. Control and/or evaluation unit for a pedal shaft arrangement (100) according to one of Claims 1 to 6 and the operation thereof, which is configured and has means to initiate, perform, control and/or be used in a method according to either of Claims 7 and 8.

10. Vehicle (1), electric bicycle, eBike, pedelec or the like that can be driven by muscle power and in particular additionally by motor power, which is formed by a drive comprising a pedal shaft arrangement (100) according to one of Claims 1 to 6 and/or by a control and/or evaluation unit according to Claim 9 and/or which is configured and has means to initiate, perform, control and/or be used in a method according to either of Claims 7 and 8.

## Revendications

1. Arrangement d'arbre de pédalier (100) pour un véhicule (1) pouvant être propulsé par la force musculaire et notamment en plus par une force de moteur, pour un vélo électrique, un eBike, un Pedelec ou similaire, comprenant :
- un arbre de pédalier (10) destiné recevoir une force et/ou un couple provenant d'un pédalage au moyen de manivelles de pédalier (8, 9) montées aux extrémités (11, 12) de l'arbre de pédalier (10),
- un arbre de sortie (20) destiné à recevoir une force et/ou un couple de l'arbre de pédalier (10),
- un accouplement mécanique (30) avec prise (31) entre les extrémités (11, 12) de l'arbre de pédalier (10), destiné à la transmission de force et/ou de couple de l'arbre de pédalier (10) à l'arbre de sortie (20),
- une première zone magnétique (25) sur et/ou dans l'arbre de sortie (20), destinée à générer et émettre un premier champ magnétique (26) qui dépend de l'état de tension mécanique de l'arbre de sortie (20),
- une deuxième zone magnétique (15) sur et/ou dans l'arbre de pédalier (10) à distance axiale par rapport à la prise (31) de l'accouplement mécanique (30) et destinée à générer et émettre un deuxième champ magnétique (16) qui dépend de l'état de tension mécanique de l'arbre de pédalier (10), **caractérisé en ce que**
- un arrangement de capteurs (40) détecte un champ magnétique total (46) émis par l'arrangement d'arbre de pédalier (100), le champ magnétique total (46) résultant d'une superposition du premier champ magnétique (26) et du deuxième champ magnétique (16).

2. Arrangement d'arbre de pédalier (100) selon la revendication 1, dans lequel l'arbre de sortie (20)
- est réalisé avec un arbre creux ou sous la forme d'un arbre creux,
- est réalisé coaxial par rapport à l'arbre de pédalier (10) et/ou
- entoure partiellement, totalement ou sensiblement totalement l'arbre de pédalier (10) et chevauche spatialement celui-ci dans la direction axiale commune (y, Y) avec une zone de chevauchement spatiale axiale (28).

3. Arrangement d'arbre de pédalier (100) selon l'une des revendications précédentes, dans lequel, dans la direction axiale commune (y, Y), la première zone magnétique (25) et la deuxième zone magnétique (15) se chevauchent spatialement partiellement, totalement ou sensiblement totalement avec une zone de chevauchement magnétique (29) spatial.

4. Arrangement d'arbre de pédalier (100) selon la revendication 3, dans lequel, dans la direction axiale commune, l'arrangement de capteurs (40) est formé partiellement, totalement ou sensiblement totalement dans la zone de chevauchement magnétique (29).

5. Arrangement d'arbre de pédalier (100) selon l'une des revendications précédentes, dans lequel la première zone magnétique (25) et la deuxième zone magnétique (15) sont configurées pour générer et émettre le deuxième champ magnétique (16) en fonction de l'angle dans la direction périphérique de l'arbre de pédalier (10), notamment à la manière d'un codage de position et/ou d'angle et/ou par le biais d'un nombre, d'une disposition, d'une répartition et/ou d'une configuration géométrique de portions magnétiques de la deuxième zone magnétique (15).

6. Arrangement d'arbre de pédalier (100) selon l'une des revendications précédentes, dans lequel :
- l'arrangement de capteurs (40) possède une pluralité de capteurs (41, 42), en particulier deux,
- la première zone magnétique (25) possède une pluralité correspondante de portions magnétiques (25-1, 25-2) espacées les unes des autres dans la direction axiale,
- le nombre de capteurs (41, 42) correspond au nombre de portions magnétiques (25-1, 25-2),
- les capteurs (41, 42) et les portions magnétiques (25-1, 25-2), dans la direction axiale de l'arbre de sortie (20), sont orientés les uns par rapport aux autres selon une association un à un et/ou se chevauchent dans l'espace partiellement, totalement ou sensiblement totalement dans leur association et/ou
- la deuxième zone magnétique (15) est une zone individuelle, homogène et/ou simplement contiguë, laquelle chevauche spatialement partiellement, totalement ou sensiblement totalement toutes les portions magnétiques (25-1, 25-2) et/ou tous les capteurs (41, 42) dans la direction axiale commune.

7. Procédé de commande et/ou d'évaluation pour un arrangement d'arbre de pédalier (100) selon l'une des revendications 1 à 6 et son fonctionnement, dans lequel :
- le signal mesuré par l'arrangement de capteurs (40) est capturé dans son évolution dans le temps, et notamment enregistré,
- les portions entre deux minima directement consécutifs dans le tracé du signal sont reconnues en tant que des demi-phases du signal,
- les demi-phases du signal, dont les valeurs de signal sont décalées vers des valeurs absolues plus grandes par rapport à des demi-phases directement voisines dans le temps, sont causées et, par conséquent, reconnues et évaluées comme étant soit « À DROITE » soit « À GAUCHE », par le côté de la manivelle de pédalier (10) sur lequel la deuxième zone magnétique (15) de la manivelle de pédalier (10) est formée par rapport à l'accouplement mécanique (30), et notamment les autres demi-phases respectives du signal sont reconnues et évaluées comme étant « À GAUCHE » ou « À DROITE », et
- pour un dispositif à commander, notamment d'un véhicule (1) sous-jacent, un signal de commande pour une demi-phase actuelle « À DROITE » et/ou un signal de commande pour une demi-phase actuelle « À GAUCHE » est ou sont généré(s) par rapport à un signal actuellement mesuré avec l'arrangement de capteurs (40) et émis vers le dispositif en vue de sa commande.

8. Procédé de commande et/ou d'évaluation selon la revendication 7, dans lequel un signal de commande respectif :
- est représentatif de la valeur du couple appliqué à l'arbre de pédalier (10),
- est généré en tant que signal actuel et dépendant du temps et/ou en tant que signal correspondant au tracé actuel du signal mesuré avec l'arrangement de capteurs (40),
- est généré en tant que signal de commande pour commander un entraînement par moteur du véhicule (1) sous-jacent,
- est généré en tant que signal de commande pour enregistrer une valeur dans une mémoire et/ou
- est généré en tant que signal de commande pour commander une indication sonore, haptique et/ou visuelle.

9. Unité de commande et/ou d'évaluation pour un arrangement d'arbre de pédalier (100) selon l'une des revendications 1 à 6 et son fonctionnement, laquelle est conçue et possède des moyens pour initier, mettre en œuvre, commander un procédé selon l'une des revendications 7 ou 8 et/ou être utilisée avec un tel procédé.

10. Véhicule (1), vélo électrique, eBike, Pedelec ou similaire pouvant être propulsé par la force musculaire et notamment en plus par une force de moteur, lequel est configuré avec un système de propulsion comprenant un arrangement d'arbre de pédalier (100) selon l'une des revendications 1 à 6 et/ou avec une unité de commande et/ou d'évaluation selon la revendication 9 et/ou qui est conçu et possède des moyens pour initier, mettre en œuvre, commander un procédé selon l'une des revendications 7 ou 8 et/ou être utilisé dans un tel procédé.
